# EUROPEAN PATENT SPECIFICATION

(11) **EP 3 257 379 B1**
(45) Date of publication and mention of the grant of the patent: **13.01.2021**
(21) Application number: 17460032.0
(22) Date of filing: 07.06.2017
(51) Int. Cl.: A23F 5/02, A23F 5/20, A23F 5/16

(54) **A METHOD FOR THE MODIFICATION OF NATURAL COFFEE BEANS**
VERFAHREN ZUR MODIFIEZIERUNG VON NATÜRLICHEN KAFFEEBOHNEN
PROCÉDÉ DE MODIFICATION DE GRAINS DE CAFÉ NATURELS

(30) Priority: 13.06.2016 PL 41755716
(43) Date of publication of application: 20.12.2017
(73) Proprietor: Rene Coffee Pads MAGMAR Marcin Troczynski, 64-920 Pila (PL)
(72) Inventor: PANKIEWICZ, Radoslaw, 61-606 Poznan (PL); LESKA, Boguslawa, 61-606 Poznan (PL); TROCZYNSKI, Marcin, 64-920 Poznan (PL); TROCZYNSKI, Pawel, 64-920 Poznan (PL)
(74) Representative: Urbanska-Luczak, Barbara

(56) References cited:
- EP-A1- 0 158 381
- EP-A2- 0 282 345
- WO-A1-92/03061
- DE-A1- 3 710 768
- GB-A- 325 468

## Description

The subject of the invention is a method for modification of natural coffee beans in order to remove irritating substances, without the loss of its useful features, such as caffeine contents, sensory and anti-oxidation properties.

Coffee is one of the most popular drinks. Consumers appreciate its many advantages, both sensory: taste and smell, and health: oxygenating organism, accelerating metabolism and delaying ageing processes. Sometimes the drinking of coffee may be connected with gastrointestinal problems. Heartburn, hyperacidity, reflux and other problems which occur after coffee is drank incline its manufacturers to manufacture coffee with significantly decreased irritating properties and stimulate the secretion of hydrochloric acid, and at the same time would maintain all sensory and health benefits. The substances responsible for the, irritating properties of the coffee are mainly C5-HT type 5-hydroxytryptamides of carboxylic acids. In the green coffee beans, depending on its type, from 700 µg to 2000 mg of C5-HT per 1 g of dry coffee mass. After the roasting of coffee, the contents of C5-HT type acids decreases, but the gastrointestinal irritation effect is not eliminated.

Other methods for performing this process are known. And so, in PL 157431 patent an effective method for lowering the C5-HT acid contents was described by mechanical removal of the external layer of the green coffee beans before the roasting process. This patent presented that the amount of hull removed from coffee beans using this method amounts to approx. 2% of the bean mass, whereas to obtain an effective lowering of C5-HT acid values it is recommended to remove approx. 10% of the bean mass. The disadvantage of this process is the large loss of coffee bean mass.

A similar method was described in the PL 175806 patent, however the level of irritating substances in the coffee which was modified in this manner is higher than 400 mg of C5-HT per 1000 g of coffee.

Another patent, PL 217713 presents the method of modification of the natural coffee beans, removing the C5-HT irritating substances consisting of husking the green beans or mixture of coffee for 1.3% to 2% of its mass, and then appropriate roasting in accordance with the temperature regime according to a described algorithm: initially coffee is placed in a roasting furnace with a temperature of 200°C to 210°C. Pouring the coffee beans reduces the temperature in the roasting furnace, so the temperature should be controlled, so it does not fall below 120°C. After 90 to 120 seconds the temperature raising process commences, at an average rate of 0.16 to 0.22°C per second to a temperature of 196°C to 205°C, after which it is rapidly cooled by adding water in an amount of 18 to 21% of the batch. Water is sprayed in the roasting furnace, and then the roasted coffee is spilled onto sieves in order to be cooled to ambient temperature. The time of roasting using this method is 550-770 seconds. The level of irritants in coffee which was modified in this manner is below 400 µg C5-HT per 1 g of coffee, and the loss of coffee mass is 1.3 to 1.8%.

In other patents: Germany, no. 1 960 694 and no. 2 031830 the elimination of irritating C5-HT using organic solvents and later processing of coffee beans with water steam for a period of 30 to 60 minutes. In the USA patent no. 4 015 022 irritants were removed by the application of hot air at a temperature of 125C and high humidity, and then cooling under a lower pressure. Other methods include subjecting coffee beans to water steam under a pressure of 0.2-0.4 MPa for 1 hour using mineral acids or liquid carbon dioxide. In the Dutch patent no. 7 407 658 a method was described allowing the removal of irritating substances by subjecting coffee beans to water steam and oxidants at a temp. of approx. 100°C for 3 hours or to oxidants for 3 hours at a temperature of 20-105°C, and then drying the beans with hot air or in vacuum. Described methods will result in reducing the life of the roasted beans and are highly energy intensive. The taste of products obtained in this manner also deteriorated.

It is known from German patent application No. 3710768 A1, process for improving roasted coffee, which lies in the fact that the processing of raw coffee is conducted in an acid solution, with continuous mixing of raw coffee and acid solution, in a temperature above room temperature, and in particular in a temperature of approximately 70 °C EP0158381 concerns a process lowering contents of caffeine and various other detrimental substances comprising a treatment with organic solvents and acids. The ratio of the (mass) of the aqueous acid solution to the mass of dry green coffee is from 0.2 to 0.9, most preferably 0.5; and the ratio of the amount (mass) of pure acid dissolved in this solution to the mass of dry green coffee is 0.005 to 0.025.

To improve the quality, in particular the organoleptic properties, of roasted coffee, the acidity of the green (unroasted) coffee beans is increased. This is preferably achieved by impregnation of the green coffee beans with acid in aqueous solution. This impregnation leads to a significant increase of the content of titratable acids in the roasted coffee and to an improvement of the quality of the roasted coffee with respect to aroma, the flavour and colour.

It is known from European patent application EP 0282345 A2 process for improving the flavour of robusta coffee sorts, where according to the invention, the green coffee beans are treated under a vapour pressure of 0.1 to 0.6 MPa, at a temperature of 100 to 155 °C for 1 to 15 minutes in a vapour space containing 0.5 to 8 ‰ of one or more organic acid(s) present also among the natural flavour ingredients of the green and/or of the roasted coffee beans, respectively, which acid(s) is (are) volatile under the given treatment conditions.

The subject of the invention is a method for modification of natural coffee beans, consisting of removing irritating substances: derivatives of organic acids of N-alkanylo-5-hydroxytryptamides (C5-HT) to a total value not exceeding 400 µg per 1 g of coffee using water solutions of natural organic acids at a concentration of 0.5 to 10 g/l, without the loss of its utility values, such as caffeine contents, sensory and anti-oxidant properties.

The essence of the invention is a method for modification of natural coffee beans, consisting of removing derivatives of organic acids of N-alkanylo-5-hydroxytryptamides (C5-HT) to a total value lower than 400 µg per gram of roasted coffee, characterized in that the green coffee beans or mixture of green coffee beans are immersed in a water solution of natural di- and tri-carboxyl organic acids with a concentration in the range of 0.5 to 10 g/l, advantageously 5 g/l, after which it is extracted for 0.5-10 hours, advantageously 5 hours, then the solution in which the beans were immersed is decanted, the beans are flushed with water, and then dried with hot air at a temperature of 40-150°C until the beans reach a humidity below 15%, then the beans are subjected to a roasting process in a known method.

It is advantageous when the organic acid is oxalic acid, or citric acid, or tartaric acid, or malic acid, or succinic acid.

The use of the solution presented in the invention enables the following technical and utility effects:
- an effective and economic method,
- a significant decrease of C5-HT acids in coffee beans was obtained, e.g. for Arabica coffee from Brasil the contents of C5-HT in green beans amounted to 770 µg/g, after the extraction process in green beans it decreased to a level of 461 µg/g, whereas after the roasting process the contents decreased even more, down to 296.61 µg/g. This is a level significantly lower than 400 µg/g, which is commonly assumed to be a limit for low-irritant coffee,
- the sensory/organoleptic qualities of the coffee were not impaired, an infusion from the beans which were prepared in this manner is very aromatic, with a deep, mellow and refreshing taste,
- no decrease of caffeine contents were found.
The invention is illustrated by the examples below

### Example 1

200 kg of Brasil green beans were prepared. Green coffee beans were immersed in a previously prepared water solution of natural dicarboxyl organic acid - oxalic acid, with a concentration of 0.5 g/l and extracted in an extractor for 5 h. After this period, the solution was decanted from the beans, and the beans were flushed with water and then dried with hot air at a temperature of 40°C until the beans reach a humidity of 15%. Then the beans were roasted in accordance with the standard procedure.

The coffee beans after roasting contained 297 µg C5-HT per 1 g of coffee. The infusion prepared by grinding the beans (8 g of coffee/200 ml of water) had a deep, mellow and refreshing taste and was very aromatic.

### Example 2

200 kg of Brasil green beans were prepared. Green coffee beans were immersed in a previously prepared water solution of natural tricarboxyl organic acid - citric acid, with a concentration in the range of 10 g/l. Green coffee beans were immersed in a previously prepared water solution of organic acid and extracted in an extractor for 10 h. After this period, the solution was decanted from the beans, and the beans were flushed with water and then dried with hot air at a temperature of 150°C until the beans reach a humidity of 10%. Then the beans were roasted in accordance with the standard procedure.

The coffee beans after roasting contained 300 µg C5-HT per 1 g of coffee. The infusion prepared by grinding the beans (8 g of coffee/200 ml of water) had a deep, mellow and refreshing taste and was very aromatic.

### Example 3

A mixture of 200 kg of green coffee beans was prepared, consisting of Arabica Brasil 40%, Robusta Uganda 30% and Robusta Vietnam 30%. The mixture of green coffee was immersed in a previously prepared water solution of natural dicarboxyl organic acid - tartaric acid, with a concentration of 0.5 g/l. Green coffee beans were immersed in a previously prepared water solution of organic acid and extracted in an extractor for 1 h. After this period, the solution was decanted from the beans, and the beans were flushed with water and then dried with hot air at a temperature of 100°C until the beans reach a humidity of 15%. Then the beans were roasted in accordance with the standard procedure.

The coffee beans after roasting contained 267 µg C5-HT per 1 g of coffee. The infusion prepared by grinding the beans (8 g of coffee/200 ml of water) had a deep, mellow and refreshing taste and was very aromatic.

### Example 4

A mixture of 200 kg of green coffee beans was prepared, consisting of Arabica Brasil 40%, Robusta Uganda 30% and Robusta Vietnam 30%. The mixture of green coffee was immersed in a previously prepared water solution of natural dicarboxyl organic acid - malic acid, with a concentration of 10 g/l. Green coffee beans were immersed in a previously prepared water solution of organic acid and extracted in an extractor for 10 h. After this period, the solution was decanted from the beans, and the beans were flushed with water and then dried with hot air at a temperature of 120°C until the beans reach a humidity of 8%. Then the beans were roasted in accordance with the standard procedure.

The coffee beans after roasting contained 297 µg C5-HT per 1 g of coffee. The infusion prepared by grinding the beans (8 g of coffee/200 ml of water) had a deep, mellow and refreshing taste and was very aromatic.

### Example 5

200 kg of Arabica green beans were prepared. Green coffee beans were immersed in a previously prepared water solution of natural dicarboxyl organic acid - succinic acid, with a concentration of 6.5 g/l, and extracted in an extractor for 6 h. After this period, the solution was decanted from the beans, and the beans were flushed with water and then dried with hot air at a temperature of 40°C until the beans reach a humidity of 12%. Then the beans were roasted in accordance with the standard procedure.

The coffee beans after roasting contained 290 µg C5-HT per 1 g of coffee. The infusion prepared by grinding the beans (8 g of coffee/200 ml of water) had a deep, mellow and refreshing taste and was very aromatic.

## Claims

1. A method for modification of natural coffee beans, consisting of removing derivatives of organic acids of N-alkanylo-5-hydroxytryptamides (C5-HT) to a total value lower than 400 µg per gram of roasted coffee, **characterized in that** the green coffee beans or mixture of green coffee beans are immersed in a water solution of natural di- and tri-carboxyl organic acids with a concentration in the range of 0.5 to 10 g/l, advantageously 5 g/l, after which it is extracted for 0.5-10 hours, advantageously 5 hours, then the solution in which the beans were immersed is decanted, the beans are flushed with water, and then dried with hot air at a temperature of 40-150°C until the beans reach a humidity below 15%, then the beans are subjected to a roasting process in a known method.

2. A method according to claim 1, **characterized in that** the organic acid is oxalic acid.

3. A method according to claim 1, **characterized in that** the organic acid is citric acid.

4. A method according to claim 1, **characterized in that** the organic acid is tartaric acid.

5. A method according to claim 1, **characterized in that** the organic acid is malic acid.

6. A method according to claim 1, **characterized in that** the organic acid is succinic acid.

## Patentansprüche

1. Ein Verfahren zur Modifikation von natürlichen Kaffeebohnen bestehend aus der Beseitigung von Derivaten von organischem Carbonsäure-5-Hydroxytryptamid (C5-HT) bis zu einem Gesamtwert von unter 400 µg je Gramm geröstetem Kaffee, **gekennzeichnet dadurch, dass** die grünen Kaffeebohnen oder eine Mischung von grünen Kaffeebohnen in eine wässrige Lösung von natürlichen organischen Di- und Tricarbonsäuren mit einer Konzentration im Bereich von 0,5-10 g/l, vorteilhafterweise 5 g/l, eingetaucht wird, wonach die Extraktion über 0,5-10 Stunden, vorteilhafterweise 5 Stunden, erfolgt und die Lösung, in der die Bohnen eingetaucht waren, anschließend dekantiert, die Bohnen mit Wasser abgespült und danach mit Heißluft bis zum Erreichen einer Feuchte von unter 15 % bei einer Temperatur von 40-150 °C getrocknet werden, um die Bohnen im Anschluss dem bekannten Röstverfahren zu unterziehen.

2. Ein Verfahren nach Anspruch 1, **dadurch gekennzeichnet, dass** die organische Säure Oxalsäure ist.

3. Ein Verfahren nach Anspruch 1, **dadurch gekennzeichnet, dass** die organische Säure Zitronensäure ist.

4. Ein Verfahren nach Anspruch 1, **dadurch gekennzeichnet, dass** die organische Säure Weinsäure ist.

5. Ein Verfahren nach Anspruch 1, **dadurch gekennzeichnet, dass** die organische Säure Apfelsäure ist.

6. Ein Verfahren nach Anspruch 1, **dadurch gekennzeichnet, dass** die organische Säure Bernsteinsäure ist.

## Revendications

1. Procédé de modification de grains de café naturels, consistant à éliminer les dérivés d'acides organiques de N-alcanylo-5-hydroxytryptamides (C5-HT) pour descendre à une valeur totale inférieure à 400 µg par gramme de café torréfié, procédé **caractérisé en ce que** les grains de café verts ou le mélange de grains de café verts sont immergés dans une solution aqueuse d'acides organiques di- et tri-carboxyliques naturels à une concentration comprise entre 0. 5 à 10 g/l, idéalement 5 g/l, après quoi il est extrait pendant 0,5-10 heures, idéalement 5 heures, puis la solution dans laquelle les grains ont été immergés est décantée, les grains sont rincés à l'eau, puis séchés à l'air chaud à une température de 40-150°C jusqu'à ce que les grains atteignent une humidité inférieure à 15%, puis les grains sont soumis à un processus de torréfaction selon une méthode connue.

2. Méthode selon la revendication 1, **caractérisée en ce que** l'acide organique est un acide oxalique.

3. Méthode selon la revendication 1, **caractérisée en ce que** l'acide organique est un acide citrique.

4. Méthode selon la revendication 1, **caractérisée en ce que** l'acide organique est un acide tartrique.

5. Méthode selon la revendication 1, **caractérisée en ce que** l'acide organique est un acide malique.

6. Méthode selon la revendication 1, **caractérisée en ce que** l'acide organique est un acide succinique.
